# EUROPÄISCHE PATENTANMELDUNG

(11) **EP 1 191 749 A2**
(43) Veröffentlichungstag der Anmeldung: **27.03.2002**
(21) Anmeldenummer: 01120264.5
(22) Anmeldetag: 23.08.2001
(51) Int. Cl.: H04L 12/56

(54) **Verfahren und Vorrichtung zur Verbesserung der Übertragungsqualität in einem paket-orientierten Datenübertragungsnetz**

(30) Priorität: 21.09.2000 DE 10046901
(71) Anmelder: SIEMENS AKTIENGESELLSCHAFT, 80333 München (DE)
(72) Erfinder: Lucioni, Gonzalo, Dr., 58454 Witten (DE); Neuhaus, Ralf, 44534 Luenen (DE); Uecker, Rainer, 45472 Muehlheim (DE)

(57) **Zusammenfassung**

Die vorliegende Erfindung betrifft ein Verfahren zur Übertragung von zeitkritischen Daten über ein paket-orientiertes Datenübertragungsnetz (LAN, WAN) mit mehreren, untereinander vernetzten Kommunikationsanlagen (1, 2). Die Verbesserung der Qualität wird dabei durch die Einführung von verschiedenen Maßnahmen erreicht.

Weiterhin betrifft die vorliegende Erfindung eine Kommunikationsanlage (1, 2) zur Durchführung dieses Verfahrens.

## Beschreibung

Die vorliegende Erfindung betrifft ein Verfahren zur Übertragung von zeitkritischen Daten in einem - vorzugsweise privaten - paket-orientierten Datenübertragungsnetz mit mehreren, untereinander verbundenen Kommunikationseinrichtungen und eine Kommunikationsanlage zur Durchführung des Verfahrens.

Mit der vorliegenden Erfindung wird ein - vorzugsweise privates - Kommunikationssystem mit mehreren räumlich verteilten Kommunikationsanlagen betrachtet. Die einzelnen Kommunikationsanlagen sind dabei über ein paket-orientiertes Datenübertragungsnetz, z.B. ein LAN (Local Area Network) und/oder ein WAN (Wide Area Network) miteinander verbunden. Weiterhin sind die Kommunikationsanlagen mit einem öffentlichen Kommunikationsnetz verbunden. Eine Datenübertragung über das Datenübertragungsnetz erfolgt dabei mittels eines asynchronen paket-orientierten Übertragungsprotokolls, z.B. gemäß dem IP-Protokoll (Internet Protocol).

Hierbei werden unter anderem zwischen den Kommunikationsanlagen zu übertragende zeitkritische Daten, insbesondere Sprachdaten, asynchron, beispielsweise in IP-Pakete verpackt, über das Datenübertragungsnetz übertragen. In der Literatur wird in diesem Zusammenhang häufig von 'Voice Over IP', kurz VoIP, gesprochen. Hierbei werden einzelne Abtastwerte des zu übermittelnden Signals, d.h. der zu übermittelnden Sprachdaten in sogenannte 'Frames' verpackt. Mehrere Frames werden wiederum in ein Datenpaket verpackt und über das Datenübertragungsnetz an den jeweiligen Empfänger, d.h. an die jeweilige Kommunikationsanlage, übermittelt.

Einige der bekannten paket-orientierten Datenübertragungsnetze, beispielsweise ein IP-orientiertes Netz, können dabei eine für die Übertragung von zeitkritischen Daten erforderliche Dienstgüte - in der Literatur häufig als 'Quality of Service', kurz QoS, bezeichnet - nicht garantieren. Bei einer Übertragung von zeitkritischen Daten, wie z.B. Sprachdaten, sind jedoch die Auswirkungen einiger QoS-Parameter, wie z.B. die Paketlaufzeiten, der sogenannte Jitter, der Paketdurchsatz und die Paketverlustrate, für die Übertragungsqualität der zeitkritischen Daten von einer entscheidenden Bedeutung.

Die bekannte Norm H.323 der ITU-T (International Telecommunication Union - Telecommunication Standardization Sector) beinhaltet technische Vorgaben für die Audio- und Video-Kommunikation über paket-orientierte Datenübertragungsnetze, die keine garantierte Dienstgüte zur Verfügung stellen. Die zu der Norm H.323 gehörende Norm H.225.0 der ITU-T gibt unter anderem Mechanismen zur Paketierung, Synchronisation und Beibehaltung der Dienstgüte an. Eine Beibehaltung der Dienstgüte wird dabei einerseits über eine Berücksichtigung der Paketverlustrate realisiert, wobei hier auch Bitfehler mitbetrachtet werden, die zu einem Paketverlust führen können, und andererseits über eine Berücksichtigung der Verzögerungen/Laufzeiten innerhalb einer Verbindung realisiert. Die Kernmechanismen zum Erreichen der Dienstgüte sind dabei stets in einer Sendeeinrichtung, d.h. von einer Kommunikationsanlage zum Datenübertragungsnetz, definiert bzw. wirksam.

Innerhalb der Norm H.323 sind das sogenannte RTP-Protokoll (Real Time Protocol oder Real Time Transfer Protocol) und das sogenannte RTCP-Protokoll (Real Time Control Protocol) definiert. Diese Protokolle dienen einer Echtzeit-kritischen Übertragung von Daten, z.B. von Audio- und Videodaten, über ein paket-orientiertes Datenübertragungsnetz. Dabei werden zur Reduzierung einer Paketverlustrate Überlastungen des Datenübertragungsnetzes über eine sogenannte RTCP-Komponente der jeweiligen Datenpakete überwacht, wobei bei einer Überlastung die Sendelast verringert wird. Weiterhin werden störende Echos von einer Kommunikationseinrichtung zum Datenübertragungsnetz, die durch eine erhöhte Laufzeit von Datenpaketen entstehen, mittels Echokompensation beseitigt.

Beim Stand der Technik sind in Kommunikationsanlagen mit einer integrierten H.323-Funktionalität folgende Maßnahmen zur Verbesserung der Qualität von zu übertragenden zeitkritischen Daten, insbesondere von Sprachdaten, realisiert:

Zur Reduzierung der Paketverlustrate wird gemäß der Norm H.225.0 bei einer Überlast des Datenübertragungsnetzes die Paketübertragungsrate in Senderichtung verringert. Dies geschieht durch eine Erhöhung der Anzahl der Frames pro RTP-Paket. Die Steuerung erfolgt dabei über RTCP-Daten. Eine Reduzierung der Paketrate erfolgt auch durch sog. "Silence Compression/ Supression", d.h. daß in einer Sprachpause keine Daten über das Datenübertragungsnetz übertragen werden.

Für eine Echokompensation ist für jede Verbindung ein sogenannter 'Echo-Canceller' - beispielsweise gemäß der Norm G.165 der ITU-T - implementiert, wobei der Echo-Canceller nach Bedarf zu- oder abschaltbar ist.

Zusätzlich wird bei einem Paketverlust in einer Empfangsrichtung, d.h. vom Datenübertragungsnetz zur Kommunikationsanlage, ein sogenanntes Geräusch-Paket - gegebenenfalls auch gedämpft - ausgegeben.

Der vorliegenden Erfindung liegt nun die Aufgabe zugrunde, ein Verfahren zur Übertragung von zeitkritischen Daten in einem paket-orientierten Datenübertraungsnetz und eine Kommunikationsanlage zur Durchführung dieses Verfahrens bereitzustellen, durch die eine Optimierung der Qualität einer Verbindung über das paket-orientierte Datenübertragungsnetz erreicht wird. Die verfügbare Dienstgüte (QoS, Quality of Service) des paket-orientierten Datenübertragungsnetzes wird dabei nicht betrachtet.

Die Aufgabe wird erfindungsgemäß durch ein Verfahren zur Übertragung von zeitkritischen Daten gemäß den beigefügten Patentansprüchen 1 und 2 und eine Kommunikationsanlage gemäß den beigefügten Patentansprüchen 11 und 12 gelöst.

Um eine Verbesserung der Qualität der Datenübertragung von an ein paket-orientiertes Datenübertragungsnetz angeschlossenen Endeinrichtungen, insbesondere bei der Übertragung von zeitkritischen Daten zwischen Kommunikationsanlagen, zu erreichen, werden erfindungsgemäß die nachfolgend beschriebenen Maßnahmen eingeführt:

Es erfolgt eine Echokompensation (Echosperre, Echo Control) mit verbindungsabhängiger Funktionalität. Das heißt, daß die jeweilige Kommunikationsanlage die Echokompensation in Abhängigkeit von der jeweiligen Verbindung durchführt, z.B. in Abhängigkeit davon, ob eine Verbindung zu einem öffentlichen Kommunikationsnetz (im POTS- oder ISDN-System) oder innerhalb eines paket-orientierten Datenübertragungsnetzes - z.B. über ein LAN oder über ein WAN (z.B. Internet) - erfolgt. Ein Vorteil dabei ist, daß die Echokompensation somit an die Bedürfnisse der jeweiligen Verbindung angepaßt werden kann. Außerdem müssen weniger teure Bauelemente zur Echokompensation bereitgestellt werden, da für bestimmte Verbindungen zum Teil einfachere Bauelemente eine ausreichende Echokompensation zur Verfügung stellen.

Eine weitere Maßnahme zur Qualitätsverbesserung besteht darin, daß bei einer Überlastung des Datenübertragungsnetzes die Frame-Rate und somit auch die Paketübertraungsrate der zu übertragenden Datenpakete reduziert wird. Bei Verlusten von Datenpaketen werden die zu übermittelnden zeitkritischen Daten empfangsseitig rekonstruiert.

Verfahren für die beiden letztgenannten Maßnahmen, d.h. die Reduzierung der Paketübertragungsrate durch eine Sendeeinrichtung und die Rekonstruktion von Daten bei einem Verlust von Datenpaketen durch den Empfänger, wurden bereits in der deutschen Patentanmeldung mit dem amtlichen Anmeldekennzeichen 100 06 245.8 vorgeschlagen.

Eine weitere Maßnahme zur Verbesserung der Qualität einer Übertragung von zeitkritischen Daten über ein paket-orientiertes Datenübertragungsnetz besteht darin, daß mehrere aufeinanderfolgende Abtastwerte (bzw. Frames) der zu übertragenden zeitkritischen Daten in unterschiedlichen Datenpaketen übertragen werden - in der Literatur häufig als 'Frame Interleaving' bezeichnet. Auf diese Weise müssen bei einem Verlust von Datenpaketen nicht mehrere, aufeinanderfolgende Abtastwerte rekonstruiert werden. Die Verzerrungen, die in diesem Fall durch die Rekonstruktion der verlorengegangenen Daten entsteht, fällt somit geringer aus, als bei der Rekonstruktion von mehreren, aufeinanderfolgenden Abtastwerten.

Eine Reduzierung der Sendelast, d.h. eine Reduzierung der zu übertragenden Daten, wird zusätzlich dadurch erreicht, daß den Daten zugeordnete Signalisierungsdaten, die eine Steuerung der Datenübertragung ausführen, nach bekannten Verfahren komprimiert werden.

Weiterhin können die zu übertragenden zeitkritischen Daten durch eine Sendeeinrichtung nach Kompressionsverfahren komprimiert und durch eine Empfängereinrichtung nach Dekompressionsverfahren wieder dekomprimiert werden, die besonders bitfehlertolerant sind (z.B. MPEG-4). In diesem Zusammenhang wird vorteilhaft ausgenutzt, daß Bitfehler in der Übertragung von zeitkritischen Audiodaten und hier insbesondere bei Sprachdaten nicht zwangsläufig zu hörbaren Verzerrungen führen.

Diese Maßnahme eignet sich besonders für störanfälligere Datenübertragungsnetze. Beispiele hierfür sind sogenannte 'Shared LANs', bei denen viele an das Datenübertragungsnetz angeschlossene Endeinrichtungen auf das Datenübertragungsnetz zugreifen, und sogenannte 'Wireless LANs', bei denen die Datenübertragung über eine Luftschnittstelle realisiert wird.

Die beschriebenen Maßnahmen können dabei gemeinsam oder nach Bedarf auch nur teilweise in ein paket-orientiertes Datenübertragungsnetz bzw. in an das Datenübertragungsnetzes angeschlossene Endeinrichtungen, insbesondere in Kommunikationsanlagen mit einem Zugang zum paket-orientierten Datenübertragungsnetz, integriert werden.

Ein Vorteil der Implementierung der beschriebenen Maßnahmen besteht darin, daß die Qualität einer Übertragung von zeitkritischen Daten, insbesondere von Audiodaten, über ein paket-orientiertes Datenübertragungsnetz erheblich verbessert wird. Außerdem kann durch die Verwendung günstigerer Bauteile eine Kosteneinsparung bei den an das Datenübertragungsnetz angeschlossenen Endeinrichtungen erreicht werden.

Vorteilhafte Ausgestaltungen der vorliegenden Erfindung sind in den Unteransprüchen angegeben.

Zur Echokompensation in Abhängigkeit von einer Verbindung zwischen den jeweiligen Endeinrichtungen kann beispielsweise ein adaptives Filter oder ein Dämpfungsglied, welches gegenüber einem adaptiven Filter wesentlich einfacher im Aufbau ist, zugeschaltet werden. So muß beispielsweise bei einer Audioverbindung mit einem analogen Teilnehmer (insbesondere über eine weite Strecke) ein technisch aufwendiges, adaptives Filter verwendet werden. Besteht jedoch eine Verbindung zu einem Teilnehmer mit einem digitalen Endgerät, so hat sich in der Praxis gezeigt, daß oftmals ein einfaches Dämpfungsglied zur Echokompensation ausreichend ist.

Auf diese Weise müssen in der erfindungsgemäßen Telekommunikationsanlage für eine bestimmte Anzahl möglicher Verbindungen weniger aufwendige Echokompensatoren (adaptive Filter) als beim Stand der Technik zur Verfügung gestellt werden, da bei einem Teil von Verbindungen mit großer Wahrscheinlichkeit einfache Dämpfungsglieder ausreichend sind.

Die Planung einer benötigten Funktionalität im Rahmen von Echokompensatoren kann beispielsweise anhand der Normen G.113 der ITU-T oder EIA/TIA TSB32-A erfolgen.

Die Reduzierung der Frame-Rate und somit die Reduzierung der zu übermittelnden Datenpakete (d.h. eine Reduzierung der Paketübertragungsrate) erfolgt durch eine Herabsetzung der Abtastrate, mit der ein zu übertragendes Signal, insbesondere ein Audiosignal, abgetastet wird.

Weiterhin kann eine Reduzierung der Paketübertragungsrate erfolgen, indem eine zeitliche Umsetzung des Signals, insbesondere eines Audiosignals, erfolgt. Zur zeitlichen Umsetzung des Signals wird zunächst ermittelt, ob zwei aufeinanderfolgende Zeitintervalle des Signals einen weitgehend ähnlichen Amplitudenverlauf aufweisen. Ist dies der Fall, werden die Daten (entsprechenden den Abtastwerten des zu übertragenden Signals) von nur einem dieser beiden Zeitintervalle übertragen. Die Dauer der Datenübertragung wird somit von zwei Zeitintervallen auf ein Zeitintervall für die entsprechenden Daten verkürzt. Diese Art der Umsetzung wird in der Literatur häufig als "Time Scale Modification" bezeichnet, z.B. in "Time Scale Modification of Speech Based on Short-Time Fourier Anaysis" von M.R. Portnoff, IEEE Transactions on ASSP, Juli 1981, Seiten 374 bis 390. Bei der Umsetzung des Audiosignals wird dessen Tonhöhe dabei weitgehend beibehalten.

Die Reduzierung der Anzahl der Abtastwerte sowie die Verringerung der Zeitdauer des zu übertragenden Signals müssen in einer Empfangseinrichtung, insbesondere in einer die Daten empfangenden Kommunikationsanlage, wieder entsprechend rückgängig gemacht werden.

Bei einer Rekonstruktion von verlorengegangenen Daten in einer Empfangseinrichtung wird ebenfalls die zeitliche Umsetzung wie zuvor beschrieben angewendet. Der Unterschied besteht darin, daß ein den verlorengegangenen Datenpaketen vorausgehendes und/oder nachfolgendes Datenpaket zeitlich so verlängert wird, daß eine durch das bzw. die verlorenen Datenpakete bedingte Lücke im Signal geschlossen bzw. zumindest verkleinert wird.

Die Aufteilung von aufeinanderfolgenden Abtastwerten bzw. Frames erfolgt gemäß einer Ausgestaltung der Erfindung derart, daß eine Durchnumerierung der Frames und eine Trennung der Frames nach einer geraden und ungeraden Numerierung erfolgt. Die Frames mit einer geraden Numerierung werden dabei in ersten Datenpaketen und Frames mit einer ungeraden Numerierung in zweiten Datenpaketen über das Datenübertragungsnetz übermittelt. Die Datenpakete werden dabei dahingehend gekennzeichnet, ob sie "gerade" oder "ungerade" Frames enthalten. Dazu können beispielsweise freie Bits im Header eines jeweiligen Datenpakets, z.B. freie Bits im Header von RTP-Paketen, verwendet werden. Durch die Kennzeichnung können die Frames durch eine die Datenpakete empfangende Einrichtung wieder in der richtigen Reihenfolge zusammengesetzt werden.

Gemäß einer Weiterbildung der Erfindung erfolgt eine Kompression von Signalisierungsdaten indem die Header-Daten eines Datenpakets, beispielsweise eines RTP-Datenpakets, komprimiert werden. Dadurch wird ebenfalls eine Reduzierung der Datenübertragungsrate erreicht.

Die vorliegende Erfindung wird nachfolgend anhand eines bevorzugten Ausführungsbeispieles unter Bezugnahme auf die beigefügte Zeichnung näher erläutert.

Dabei zeigt:

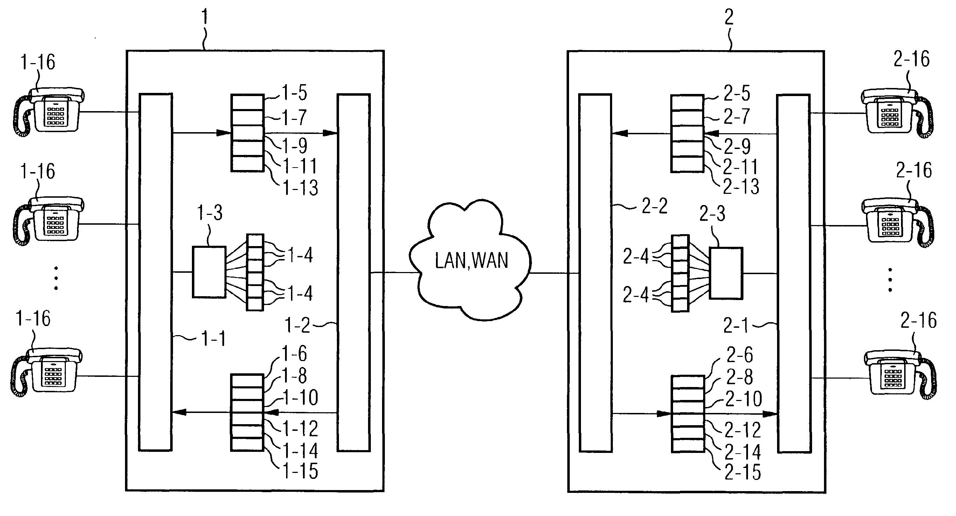

- Fig. 1:: ein Strukturbild zur schematischen Darstellung von zwei untereinander verbundenen erfindungsgemäßen Kommunikationsanlagen.

Fig. 1 zeigt ein Strukturbild zur schematischen Darstellung eines - vorzugsweise privaten - Kommunikationssystems, bestehend aus zwei erfindungsgemäßen Kommunikationsanlagen 1, 2 mit den an den erfindungsgemäßen Verfahren beteiligten wesentlichen Funktionseinheiten. Die beiden Kommunikationsanlagen 1, 2 sind untereinander über ein paket-orientiertes Datenübertragungsnetz LAN, WAN verbunden, wobei das Datenübertragungsnetz als LAN (Local Area Network), z.B. innerhalb eines Gebäudes, oder als WAN (Wide Area Network), z.B. zwischen zwei Städten, ausgebildet sein kann. Bei einem WAN erfolgt die Datenübertragung beispielsweise über das bekannte Internet. Zum Anschluß an das paket-orientierte Datenübertragungsnetz (LAN, WAN) verfügen die Kommunikationsanlagen über entsprechend ausgestaltete Schnittstellen 1-2, 2-2.

Weiterhin sind die Kommunikationsanlagen 1, 2 mit einem-nicht dargestellten - öffentlichen Kommunikationsnetz verbindbar, wobei eine Datenübertragung zwischen einer Kommunikationsanlage 1, 2 und einer im öffentlichen Kommunikationsnetz angeordneten Kommunikationsanlage entweder in einem sogenannten POTS- (Plain Old Telephone Service)- oder in einem sogenannten ISDN- System (Integrated Service Digital Network) realisiert wird.

Innerhalb des paket-orientierten Datenübertragungsnetzes LAN, WAN erfolgt die Übertragung von zeitkritischen Daten, insbesondere von Audiodaten - beispielsweise von Abtastwerten eines abgetasteten Sprachsignals -, in IP-Paketen. In der Literatur wird in diesem Zusammenhang häufig von 'Voice Over IP', kurz VoIP, gesprochen. Eine Übertragung von Audio- und Videodaten über ein IP-orientiertes Netzwerk ist dabei in der Norm H.323 der ITU-T festgelegt.

An die Kommunikationsanlagen 1, 2 sind Endgeräte 1-16, 2-16-beispielsweise herkömmliche Telefone oder entsprechend ausgestaltete Datenverarbeitungseinrichtungen - angeschlossen, deren Audiodaten übertragen werden sollen. Die Endgeräte 1-16, 2-16 sind über eine Vermittlungseinrichtung 1-1, 2-1 mit der jeweiligen Kommunikationsanlage 1, 2 verbunden.

Die erfindungsgemäßen Kommunikationsanlagen 1, 2 beinhalten eine jeweilige Auswahleinrichtung 1-3, 2-3 zur Auswahl eines geeigneten Echokompensators 1-4, 2-4 in Abhängigkeit von einer eingerichteten Verbindung. Eine Echokompensation erfolgt dabei von der jeweiligen Kommunikationsanlage 1, 2 zum entsprechenden Netz, d.h. zum paket-orientierten Datenübertragungsnetz oder zum öffentlichen Kommunikationsnetz.

Wird beispielsweise ausgehend von einem Endgerät 1-16 eine Verbindung zu einem analogen Amt im öffentlichen Kommunikationsnetz aufgebaut, so wird dies von der Auswahleinrichtung 1-3 automatisch erkannt und zur Echokompensation ein adaptives Filter zugeschaltet. Wird von diesem Endgerät 1-16 jedoch eine Verbindung zu einem Endgerät 2-16 innerhalb des Kommunikationssystems über das paket-orientierte Datenübertragungsnetz aufgebaut, so wird dies ebenfalls von der Auswahleinrichtung 1-3 automatisch erkannt, und zur Echokompensation beispielsweise ein Dämpfungsglied zugeschaltet.

Weiterhin ist in den erfindungsgemäßen Kommunikationsanlagen 1, 2 jeweils eine Reduzierungseinrichtung enthalten. Die Reduzierungseinrichtung dient einer Reduzierung der Paketübertragungsrate für das paket-orientierte Datenübertragungsnetz und wird durch eine Herabsetzung der Abtastrate mit einer Abtastraten-Reduzierungseinrichtung 1-5, 2-5 in einer Sendeeinrichtung realisiert. In einer Empfangseinrichtung wird die Herabsetzung der Abtastrate mittels einer invers arbeitenden empfängerseitigen Abtastraten-Reduzierungseinrichtung 1-6, 2-6 wieder rückgängig gemacht.

Eine Verringerung der Zeitdauer des Audiosignales erfolgt in einer Sendeeinrichtung mittels einer Zeitdauer-Reduzierungseinrichtung 1-7, 2-7. In einer Empfangseinrichtung wird die Verringerung der Zeitdauer mittels einer invers arbeitenden empfängerseitigen Zeitdauer-Reduzierungseinrichtung 1-8, 2-8 wieder rückgängig gemacht.

Mittels einer in der jeweiligen Kommunikationsanlage 1, 2 implementierten Zuordnungseinrichtung 1-9, 2-9 werden zu sendende, aufeinanderfolgende Abtastwerte eines abgetasteten Audiosignales für die Datenübertraung über das paket-orientierte Datenübertragungsnetz unterschiedlichen Datenpaketen (RTP-Paketen) zugeordnet. Die Zuordnung erfolgt dabei für als "gerade" und "ungerade" numerierte Frames in unterschiedlichen Datenpaketen. Die so verschachtelten Frames werden durch eine Zuordnungseinrichtung 1-10, 2-10 in einer Empfangseinrichtung wieder in ihre ursprüngliche Reihenfolge zusammengesetzt.

Zusätzlich werden in den zu versendenden Datenpaketen Signalisierungsdaten, beispielsweise die Daten eines RTP-Headers, durch eine Signalisierungs-Kompressionseinrichtung 1-11, 2-11 komprimiert. Die Dekompression dieser Daten erfolgt in einer Empfangseinrichtung durch eine entsprechende Signalisierungs-Dekompressionseinrichtung 1-12, 2-12.

Audiodaten können zur Datenübertragung ebenfalls mit geeigneten CODEC-Verfahren (z.B. MPEG-4) komprimiert werden. Die Kompression erfolgt dabei in einer Sendeeinrichtung durch eine Audiokompressionseinrichtung 1-13, 2-13. Die Dekompression wird in einer Empfangseinrichtung von einer Audiodekompressionseinrichtung 1-14, 2-14 durchgeführt.

Zur Kompensation von Paketverlusten steht in einer Empfangseinrichtung eine Rekonstruktionseinrichtung 1-15, 2-15 zur Verfügung. Bei einem Verlust eines Datenpaketes wird durch die Rekonstruktionseinrichtung 1-15, 2-15 das Datenpaket, das dem verlorengegangenen Datenpaket vorausgeht und/oder nachfolgt wiederholt zum Empfänger, d.h. an das entsprechende an der Kommunikationsanlage 1, 2 angeschlossene Endgerät 1-16, 2-16, ausgegeben.

## Patentansprüche

1. Verfahren zur Übertragung von zeitkritischen Daten über ein paket-orientiertes, aus mehreren untereinander verbundenen Kommunikationseinrichtungen (1, 2) bestehenden Datenübertragungsnetz (LAN, WAN), wobei an den Kommunikationseinrichtungen (1, 2) jeweils Endgeräte (1-16, 2-16) angeschlossen sind,
bei dem Abtastwerte der zu übermittelnden zeitkritischen Daten in Datenpaketen über das Datenübertragungsnetz (LAN, WAN) übertragen werden,
**dadurch gekennzeichnet,**
**daß** eine Auswahl eines Echokompensators (1-4, 2-4) in Abhängigkeit von der Art einer Verbindung zwischen den Endgeräten erfolgt.

2. Verfahren zur Übertragung von zeitkritischen Daten über ein paket-orientiertes, aus mehreren untereinander verbundenen Kommunikationseinrichtungen (1, 2) bestehenden Datenübertragungsnetz (LAN, WAN), wobei an den Kommunikationseinrichtungen (1, 2) jeweils Endgeräte (1-16, 2-16) angeschlossen sind,
bei dem Abtastwerte der zu übermittelnden zeitkritischen Daten in Datenpaketen über das Datenübertragungsnetz (LAN, WAN) übertragen werden,
**dadurch gekennzeichnet,**
**daß** aufeinanderfolgende Abtastwerte unterschiedlichen Datenpaketen zugeordnet werden.

3. Verfahren gemäß Anspruch 1 oder 2,
**gekennzeichnet durch**
daß die Paketübertragungsrate der zu übermittelnden Datenpakete bei einer Überlastung des Datenübertragungsnetzes (LAN, WAN) reduziert wird,
daß empfangenen zeitkritische Daten bei einem Verlust von Datenpaketen im einer Empfangseinrichtung rekonstruiert werden, daß Signalisierungsdaten und zeitkritische Daten mittels bitfehlertoleranter Codec-Verfahren zur Sprachdatenübertragung komprimiert und dekomprimiert werden.

4. Verfahren gemäß Anspruch 1 oder 3,
**dadurch gekennzeichnet,**
**daß** zur Echokompensation in Abhängigkeit von der Verbindung entweder ein Echokompensator mit adaptiven Filtern oder ein Echokompensator mit Dämpfungsgliedern ausgewählt wird.

5. Verfahren gemäß einem der Ansprüche 2 bis 34,
**dadurch gekennzeichnet,**
**daß** aufeinanderfolgende Abtastwerte numeriert, und Abtastwerte mit gerader Numerierung ersten Datenpaketen und Abtastwerte mit ungerader Numerierung zweiten Datenpaketen zugeordnet werden.

6. Verfahren gemäß einem der Ansprüche 3 bis 5,
**dadurch gekennzeichnet,**
**daß** die Paketübertragungsrate durch eine Herabsetzung der Abtastrate zur Abtastung der zeitkritischen Daten reduziert wird.

7. Verfahren gemäß einem der Ansprüche 3 bis 6,
**dadurch gekennzeichnet,**
**daß** die Paketübertragungsrate durch eine Verringerung der Zeitdauer der zeitkritischen Daten unter weitgehender Beibehaltung einer Tonhöhe reduziert wird.

8. Verfahren gemäß einem der Ansprüche 3 bis 7,
**dadurch gekennzeichnet,**
**daß** die Rekonstruktion der empfangenen zeitkritischen Daten dadurch erfolgt, daß das dem verlorengegangenem Datenpaket vorangegangene oder nachfolgende Datenpaket durch den Empfänger erneut ausgegeben wird.

9. Verfahren gemäß einem der Ansprüche 3 bis 8,
**dadurch gekennzeichnet,**
**daß** Signalisierungsdaten die Daten in einem Paketkopf der Datenpakete sind.

10. Verfahren gemäß einem der vorhergehenden Ansprüche,
**dadurch gekennzeichnet,**
**daß** die zeitkritischen Daten Audiodaten sind.

11. Kommunikationsanlage (1, 2) zum Anschluß von Endgeräten (1-16, 2-16) an ein Kommunikationsnetz, mit einer Schnittstelle (1-2, 2-2) zu einem paket-orientierten Datenübertragungsnetz (LAN, WAN) wobei Abtastwerte von zu übermittelnden zeitkritischen Daten in Datenpaketen über das Datenübertragungsnetz (LAN, WAN) übertragen werden,
**gekennzeichnet durch**
eine Auswahleinrichtung (1-2, 2-2) zur Auswahl eines Echokompensators (1-4, 2-4) in Abhängigkeit von einer Verbindung zwischen den Endgeräten.

12. Kommunikationsanlage (1, 2) zum Anschluß von Endgeräten (1-16, 2-16) an ein Kommunikationsnetz, mit einer Schnittstelle (1-2, 2-2) zu einem paket-orientierten Datenübertragungsnetz (LAN, WAN) wobei Abtastwerte von zu übermittelnden zeitkritischen Daten in Datenpaketen über das Datenübertragungsnetz (LAN, WAN) übertragen werden,
**gekennzeichnet durch**
eine Zuordnungseinrichtung (1-9, 2-9, 1-10, 2-10) zum Zuordnen von aufeinanderfolgenden Abtastwerten zu unterschiedlichen Datenpaketen.

13. Kommunikationsanlage (1, 2) gemäß Anspruch 11 oder 12, **gekennzeichnet durch**
eine Reduzierungseinrichtung (1-5, 2-5, 1-6, 2-6, 1-7, 2-7, 1-8, 2-8) zur Reduzierung der Paketübertragungsrate der zu übermittelnden Datenpakete bei einer Überlastung des Datenübertragungsnetzes (LAN, WAN),
eine Rekonstruktionseinrichtung (1-15, 2-15) zur Rekonstruktion von zu empfangenden zeitkritischen Daten bei einem Verlust von Datenpaketen, und
eine Signalisierungskompressions- (1-11, 2-11) und Signalisierungsdekompressionseinrichtung (1-12, 2-12) zur Kompression und Dekompression von Signalisierungsdaten, und
eine Datenkompressions- (1-13, 2-13) und Datendekompressionseinrichtung (1-14, 2-14) zur Kompression und Dekompression der zeitkritischen Daten mittels bitfehlertoleranter Codec-Verfahren zur Sprachdatenübertragung.

14. Kommunikationsanlage (1, 2) gemäß Anspruch 13,
**dadurch gekennzeichnet,**
**daß** die Reduzierungseinrichtung (1-5, 2-5, 1-6, 2-6) eine Verringerung der Abtastrate bei einer Abtastung der zeitkritischen Daten vornimmt.

15. Kommunikationsanlage (1, 2) gemäß Anspruch 13,
**dadurch gekennzeichnet,**
**daß** die Reduzierungseinrichtung (1-7, 2-7, 1-8, 2-8) die Zeitdauer der zeitkritischen Daten unter weitgehender Beibehaltung einer Tonhöhe der zeitkritischen Daten verringert.

16. Kommunikationsanlage (1, 2) nach einem der Ansprüche 11 bis 15,
**dadurch gekennzeichnet,**
**daß** die zeitkritischen Daten Audiodaten sind.
